# EUROPÄISCHE PATENTANMELDUNG

(11) **EP 1 174 729 A2**
(43) Veröffentlichungstag der Anmeldung: **23.01.2002**
(21) Anmeldenummer: 01116322.7
(22) Anmeldetag: 05.07.2001
(51) Int. Cl.: G01S 13/34, G01S 7/35

(54) **Verfahren und Vorrichtung zur Entfernungsmessung**

(30) Priorität: 19.07.2000 DE 10035135
(71) Anmelder: SICK AG, 79183 Waldkirch (DE)
(72) Erfinder: Blöhbaum, Frank, 79112 Freiburg (DE); Jahn, Axel, 79183 Waldkirch (DE)
(74) Vertreter: Manitz, Finsterwald & Partner GbR

(57) **Zusammenfassung**

Die Erfindung betrifft ein Verfahren sowie eine Vorrichtung zur Bestimmung von Entfernungsmeßwerten, bei dem von einem Sender ein oszillierendes Sendesignal ausgesandt wird, welches von einem im Meßbereich vorhandenen Objekt reflektiert oder remittiert und von einem ortsnah zum Sender angeordneten Empfänger empfangen wird, wobei das Empfangssignal mit einem ersten Mischer-Eingangssignal und mit einem zweiten Mischer-Eingangssignal, welches gegenüber dem ersten Mischer-Eingangssignal um eine definierte Phase verschoben ist, gemischt wird, die beiden, durch die genannten Mischvorgänge erhaltenen Mischer-Ausgangsignale integriert werden, die beiden durch die Integrationen erhaltenen Integrationssignale voneinander subtrahiert werden, das durch die Subtraktion erhaltene Differenzsignal einer weiteren Verarbeitung zugeführt wird, und zur Bestimmung eines Entfernungsmeßwertes das Differenzsignal mit einem analog oder digital erzeugten Vergleichssignal verglichen wird.

## Beschreibung

Die Erfindung betrifft ein Verfahren sowie eine Vorrichtung zur Bestimmung von Entfernungsmeßwerten. Hierbei wird von einem Sender ein oszillierendes Sendesignal ausgesandt, welches von einem im Meßbereich vorhandenen Objekt reflektiert oder remittiert und von einem ortsnah zum Sender angeordneten Empfänger empfangen wird, wobei aus der Phasenverschiebung zwischen Sendesignal und Empfangssignal ein Rückschluß auf den zu bestimmenden Entfernungsmeßwert erfolgt.

Bei aus dem Stand der Technik bekannten Verfahren und Vorrichtungen der genannten Art ist von Nachteil, daß Nichtlinearitäten und Unsymmetrien in der Empfängerstufe ebenso wie Umwelteinflüsse, insbesondere Hintergrundstrahlung, zu störenden Verzerrungen und Gleichsignal-Überlagerungen führen, die die Meßgenauigkeit beeinträchtigen. Eine Beseitigung der genannten Einflüsse ist in der Regel nur über die Durchführung mehrerer Messungen möglich, deren Ergebnisse dann in geeigneter Weise zueinander in Relation gesetzt werden. Dabei muß sichergestellt werden, daß sich die Umwelteinflüsse während der genannten mehreren, zeitlich aufeinanderfolgenden Messungen nicht verändern.

Somit ist an dem bekannten Verfahren von Nachteil, daß sie aufgrund der Mehrzahl der durchzuführenden Messungen mit hohem Aufwand verbunden sind und relativ viel Zeit benötigen. Zudem ist von Nachteil, daß die Umwelteinflüsse während der Messungen nicht immer konstant gehalten werden können, was dann letztlich zu Meßfehlern führt.

Die der Erfindung zugrundeliegende Aufgabe besteht darin, Verfahren und Vorrichtungen der eingangs genannten Art derart zu verbessern, daß der Aufwand zur Entfernungsmessung reduziert und eine einfache, aber effiziente Beseitigung von Störeinflüssen möglich wird.

Ein erfindungsgemäße Verfahren löst diese Aufgabe, indem
- das Empfangssignal mit einem ersten Mischer-Eingangssignal und mit einem zweiten Mischer-Eingangssignal, welches gegenüber dem ersten Mischer-Eingangssignal um eine definierte Phase verschoben ist, gemischt wird,
- die beiden, durch die genannten Mischvorgänge erhaltenen Mischer-Ausgangsignale integriert werden,
- die beiden durch die Integrationen erhaltenen Integrationssignale voneinander subtrahiert werden,
- das durch die Subtraktion erhaltene Differenzsignal einer weiteren Verarbeitung zugeführt wird, und
- zur Bestimmung eines Entfernungsmeßwertes das Differenzsignal mit einem analog oder digital erzeugten Vergleichssignal verglichen wird.

Eine erfindungsgemäße Vorrichtung löst die genannte Aufgabe, indem
- ein Mischer vorgesehen ist, welcher das Empfangssignal mit einem ersten Mischer-Eingangssignal und mit einem zweiten Mischer-Eingangssignal, welches gegenüber dem ersten Mischer-Eingangssignal um eine definierte Phase verschoben ist, mischt,
- zumindest ein Integrator vorgesehen ist, der die beiden, durch die genannten Mischvorgänge erhaltenen Mischer-Ausgangsignale integriert,
- eine Differenzstufe vorgesehen ist, die die beiden durch die Integrationen erhaltenen Integrationssignale voneinander subtrahiert, und
- eine Auswerteeinheit vorgesehen ist, in welcher das durch die Subtraktion erhaltene Differenzsignal einer weiteren Verarbeitung zugeführt wird, wobei
- die Auswerteeinheit eine Vergleichsstufe beinhaltet, die zur Bestimmung eines Entfernungsmeßwertes das Differenzsignal mit einem analog oder digital erzeugten Vergleichssignal vergleicht, welches entweder die gleiche Frequenz besitzt wie das Differenzsignal, diesem gegenüber jedoch eine definierte Phasenverschiebung aufweist oder welches ein Signal ist, das parallel zum Gleichanteilssignal des Differenzsignals verläuft.

Vorteilhafte Weiterbildungen der Erfindung sind in den Unteransprüchen angegeben.

Die Erfindung wird nachfolgend unter Bezugnahme auf die Figuren erläutert, wobei anhand der Fig. 1 bis 6 das der Erfindung zugrundeliegende Problem beschrieben wird und anhand der nachfolgenden Figuren wesentliche und/oder bevorzugte Merkmale der Erfindung erörtert werden; in den Figuren zeigen:
- Fig. 1: den möglichen zeitlichen Verlauf von Sendesignal, Empfangssignal, Mischer-Eingangssignalen, Integrationssignalen und Differenzsignal bei einer Phasenverschiebung von 0° zwischen Sendesignal und Empfangssignal,
- Fig. 2 - 6: den zeitlichen Verlauf von Integrationssignalen und Differenzsignal bei verschiedenen Phasenverschiebungen zwischen Sendesignal und Empfangssignal,
- Fig. 7: einen möglichen zeitlichen Verlauf von Sendesignal und Mischer-Eingangssignalen, die im Rahmen der Erfindung zum Einsatz kommen,
- Fig. 8 - 14: den erfindungsgemäßen zeitlichen Verlauf von Integrationssignalen, Differenzsignal und Vergleichssignal bei verschiedenen Phasenverschiebungen zwischen Sendesignal und Empfangssignal, und
- Fig. 15: ein Blockschaltbild einer erfindungsgemäßen Vorrichtung.

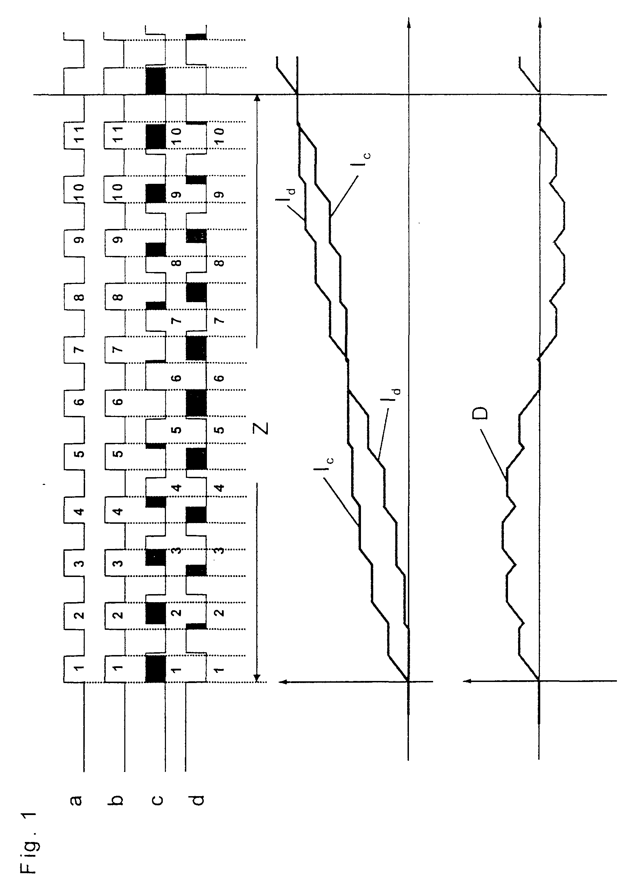

Fig. 1 zeigt den zeitlichen Verlauf eines periodisch getakteten, rechteckförmigen Sendesignals a im Zeitbereich eines Meßzyklus Z, welcher insgesamt 11 Takte des Sendesignals a umfaßt.

Das in Fig. 1 dargestellte Empfangssignal b ist gegenüber dem Sendesignal a unverzögert dargestellt, was bedeutet, daß im gezeigten Ausführungsbeispiel keine externe Signallaufzeit vorhanden ist, die durch den Abstand eines Objektes von der Meßvorrichtung bewirkt wird. Dementsprechend besitzt das Empfangssignal b die gleiche Phasenlage wie das Sendesignal a.

Das Empfangssignal b wird nun mit einem ersten Mischer-Eingangssignal c und mit einem zweiten Mischer-Eingangssignal d gemischt, wobei das zweite Mischer-Eingangssignal d gegenüber dem ersten Mischer-Eingangssignal c um 180° phasenverschoben ist.

Die Frequenz fs des Sendesignals a ist um den Faktor 1,1 höher als die Frequenz f_{M} der beiden Mischer-Eingangssignale c und d, was dazu führt, daß innerhalb des Meßzyklus Z insgesamt 11 Taktzyklen des Sende- bzw. Empfangssignals a, b und 10 Taktzyklen der beiden Mischer-Eingangssignale c, d gezählt werden können. Zu Beginn des Meßzyklus Z besitzen das Sendesignal a und die Mischer-Eingangssignale c, d eine Phasenlage von 0° zueinander. Diese Phasenlage verschiebt sich dann während eines Meßzyklus Z, zu Beginn des nächsten Meßzyklus Z ist die Phasenlage jedoch wieder 0°.

Im Rahmen des Mischvorgangs wird das Empfangssignal b mit dem ersten Mischer-Eingangssignal c multipliziert, was zu dem flächig schwarz gezeichneten Mischer-Ausgangssignal führt, das in Fig. 1 in Verbindung mit Signal c dargestellt ist. Eine entsprechende Multiplikation wird zwischen dem Empfangssignal b und dem zweiten Mischer-Eingangssignal d durchgeführt. Auch hier ist das entsprechende Mischer-Ausgangssignal flächig schwarz dargestellt.

Die beiden erwähnten Mischer-Ausgangssignale werden nun jeweils integriert, wodurch die beiden unterhalb der Signale a bis d dargestellten Integrationssignale I_{c}, I_{d} erhalten werden.

Die beiden Integrationssignale I_{c} und I_{d} werden dann voneinander subtrahiert, wodurch das unterhalb der Integrationssignale I_{c}, I_{d} in Fig. 1 dargestellte Differenzsignal D erhalten wird. Die Frequenz f_{D} des Differenzsignals D entspricht der Differenz zwischen der Frequenz fs des Sendesignals und der Frequenz f_{M} der Mischer-Eingangssignale c, d. Im dargestellten Ausführungsbeispiel beträgt diese Frequenz f_{D} - entsprechend vorstehend erwähntem Faktor 1,1 - ein Zehntel der Frequenz f_{M} der Mischer-Eingangssignale c, d. Das Differenzsignal D besitzt gegenüber dem Sendesignal a sowie gegenüber den Mischer-Eingangssignalen c, d eine Phasenlage von 0°.

Die vorstehenden Erläuterungen dienen dazu, die grundsätzliche Vorgehensweise zur Ermittlung des Differenzsignals D zu veranschaulichen.

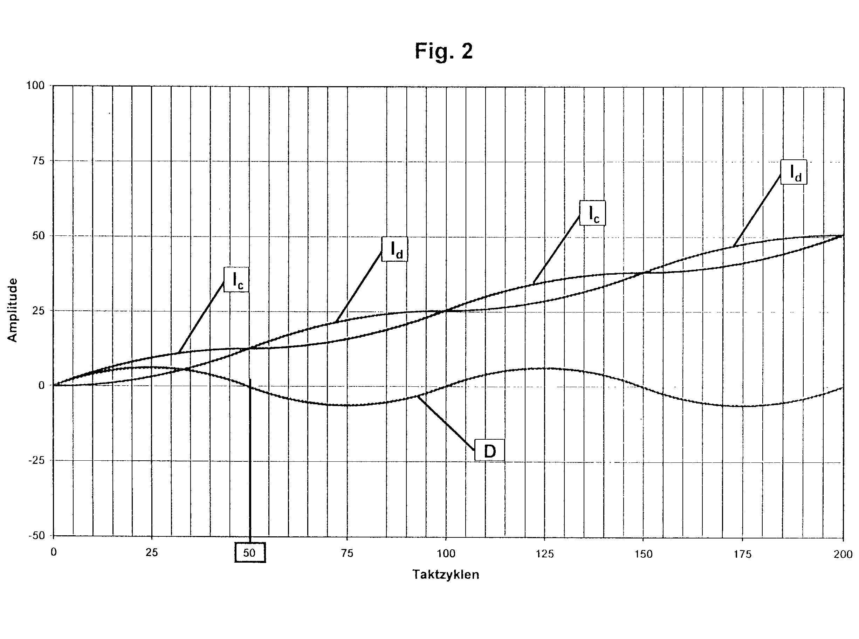

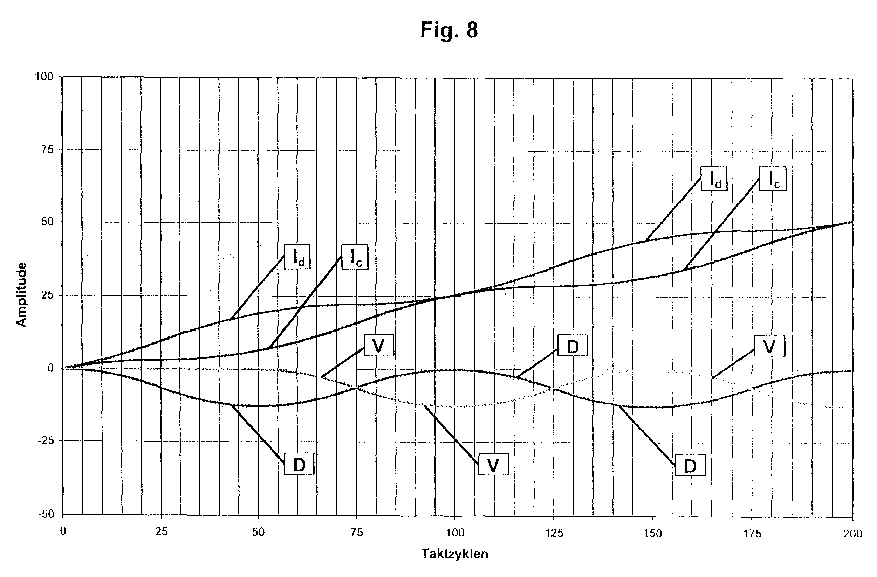

In Verbindung mit den Figuren 2 bis 6 wird ein aus internem Stand der Technik der Anmelderin bekanntes Verfahren zur Entfernungsmessung beschrieben, bei dem das Differenzsignal D ausgewertet wird. Dieses Verfahren ist mit einigen Nachteilen behaftet, die im Rahmen der Erfindung beseitigt werden. Die Erfindung wird in Verbindung mit den Figuren 8 bis 16 beschrieben.
In den Figuren 2 bis 6 und 8 bis 14 wird zur Erhöhung der Übersichtlichkeit auf eine Darstellung der Signale a bis d gemäß Fig. 1 verzichtet; es werden lediglich Integrations- und Differenzsignale I_{c}, I_{d}, D dargestellt, wobei dort dann jeweils ein Faktor von 1,01 zwischen den Frequenzen der Mischer-Eingangssignale c, d und dem Sendesignal a zugrundegelegt wird, so daß hier letztlich im Vergleich zu Fig. 1 eine kleinere Differenzfrequenz zwischen den Mischer-Eingangssignalen c, d und dem Sendesignal a vorliegt.

Unter diesen Voraussetzungen ergibt sich der in Fig. 2 dargestellte Verlauf der Integrationssignale I_{c}, I_{d} und des Differenzsignals D bei einer Phasenverschiebung von 0° zwischen Sende- und Empfangssignal.
Der erste Nulldurchgang des Differenzsignals D nach 50 Taktzyklen, bei dem die Nullinie von oben nach unten geschnitten wird, entspricht letztlich der zu ermittelnden Entfernung. Da im in Fig. 2 dargestellten Beispiel von einer Phasenlage von 0° zwischen Sende und Empfangssignal ausgegangen wird, ist dementsprechend auch der zu bestimmende Abstand gleich Null. Dies bedeutet, daß der ermittelte Wert von 50 Taktzyklen für den genannten Schnittpunkt einem Abstand von Null entspricht und somit einen Nullbezug bildet.

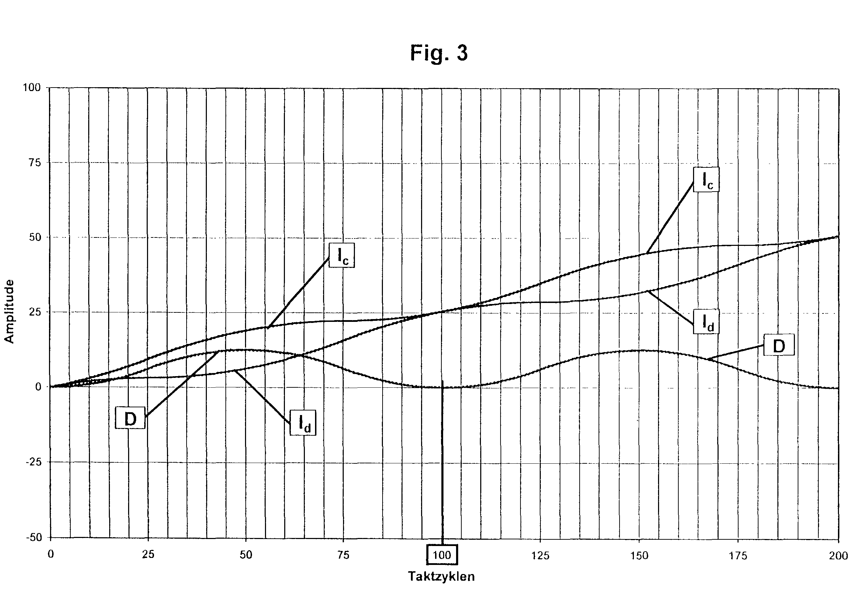

Fig. 3 zeigt eine Fig. 2 entsprechende Darstellung mit dem Unterschied, daß hier eine Phasenverschiebung von 90° zwischen Sende- und Empfangssignal vorliegt. Der zu ermittelnde Entfernungswert entspricht gemäß Fig. 3 100 Taktzyklen, also genau demjenigen Wert, bei dem das Differenzsignal D die Nullinie berührt. Da das Differenzsignal D in diesem Bereich, in dem es die Nullinie bei 100 Taktzyklen berührt, sehr flach verläuft, ist auf nachteilige Weise keine ausreichend genaue Bestimmung dieses Berührungspunktes möglich, was zu einen dementsprechend ungenauen Entfernungsmeßwert führt.
Falls der Entfernungsmeßwert jedoch genau ermittelt werden könnte, müßte von dem Wert von 100 Taktzyklen der gemäß Fig. 2 ermittelte Nullbezug von 50 Taktzyklen abgezogen werden, so daß sich gemäß Fig. 3 letztlich ein Abstandswert von 50 Taktzyklen ergibt, der einer Phasenverschiebung von 90° entspricht.

Alternativ könnten zur Ermittlung des Entfernungsmeßwertes auch aus den zur Verfügung stehenden Meßwerten des Differenzsignals D dessen Koeffizienten bestimmt werden, wobei der Phasenkoeffizient letztlich die zu ermittelnde Phasenverschiebung zwischen Sende- und Empfangssignal charakterisiert, aus der dann auf den Entfernungsmeßwert rückgeschlossen werden kann.

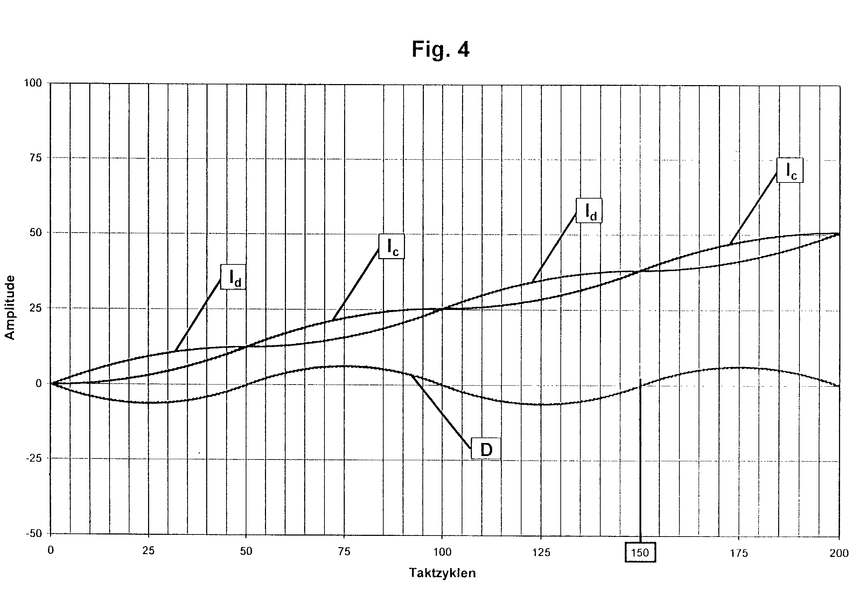

Fig. 4 zeigt eine Fig. 2 und 3 entsprechende Darstellung mit einer Phasenverschiebung von 180° zwischen Sende- und Empfangssignal.
Hier existieren mehrere Nulldurchgänge des Differenzsignals D, so daß keine eindeutige Bestimmung der dem Entfernungsmeßwert entsprechenden Anzahl der Taktzyklen möglich ist. Der korrekte Wert würde hier 150 Taktzyklen betragen, d.h. es ist derjenige Schnittpunkt des Differenzsignals D mit der Nullinie maßgeblich, bei dem das Differenzsignal die Nullinie das zweite Mal von unten kommend schneidet. Nach Abzug des gemäß Fig. 2 ermittelten Nullbezugs von 50 Taktzyklen ergibt sich ein Abstandswert von 100 Taktzyklen, der einer Phasenverschiebung von 180° entspricht.

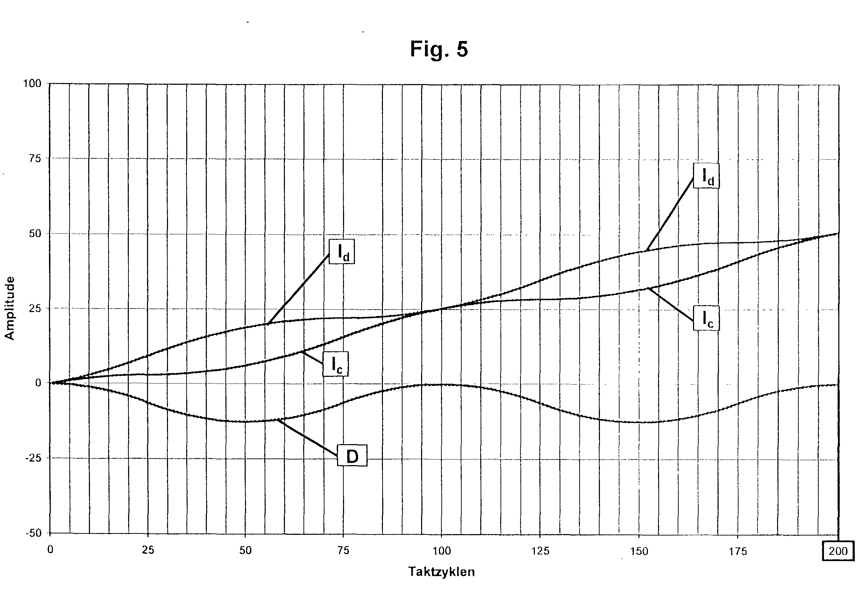

Fig. 5 zeigt den Fig. 2 bis 4 entsprechende Signalverläufe bei einer Phasenverschiebung von 270° zwischen Sendesignal und Empfangssignal. Hier ergibt sich wiederum das in Verbindung mit Fig. 3 bereits erläuterte Problem des flachen Verlaufs des Differenzsignals d im Bereich des für die Entfernung maßgeblichen Taktzykluswertes von 200. Falls der Entfernungsmeßwert hier genau ermittelt werden könnte, müßte von dem Wert von 200 Taktzyklen wiederum der gemäß Fig. 2 ermittelte Nullbezug von 50 Taktzyklen abgezogen werden, so daß sich gemäß Fig. 5 letztlich ein Abstandswert von 150 Taktzyklen ergibt, der einer Phasenverschiebung von 270° entspricht.

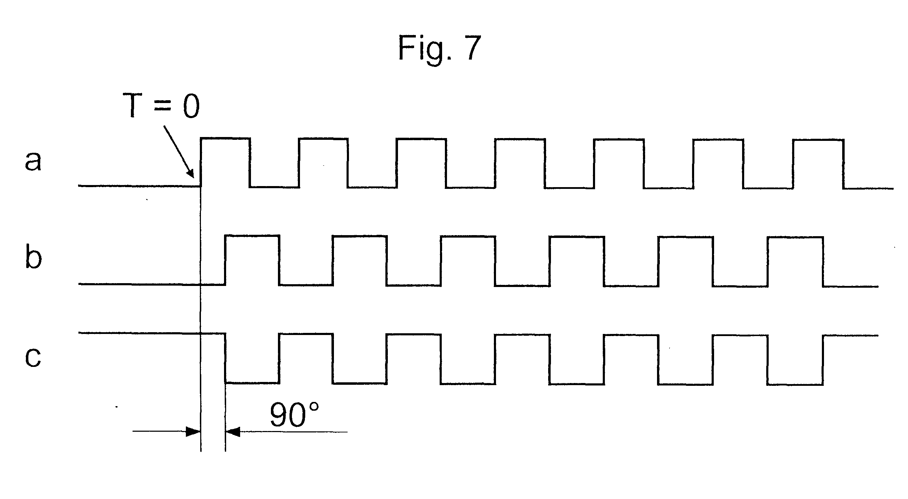

Die Fig. 2 bis 5 zeigen demgemäß, daß sich bei einer ausreichend kleinen Differenzfrequenz zwischen den Mischer-Eingangssignalen und dem Sendesignal ein Differenzsignal D ergibt, welches gemäß einer Sinusfunktion verläuft. Die Phasenverschiebung und der Gleichanteil dieser Sinusfunktion sind proportional zur Signallaufzeit des Sendesignals und somit zum zu ermittelnden Entfemungsmeßwert. Grundsätzlich kann die Signallaufzeit durch die Ermittlung der Nulldurchgänge des Differenzsignals D bestimmt werden, wobei hier jedoch, wie vorstehend erläutert, Phasenlagen um N* 90° unsicher sind, da hier das Differenzsignal D sehr flach verläuft und/oder aufgrund der mehreren Schnittpunkte mit der Nullinie ein mehrdeutiges Ergebnis liefert. Dieses Problem wird mit der vorliegenden Erfindung beseitigt, was nachstehend unter Bezugnahme auf die Fig. 7 bis 16 noch näher erläutert wird.

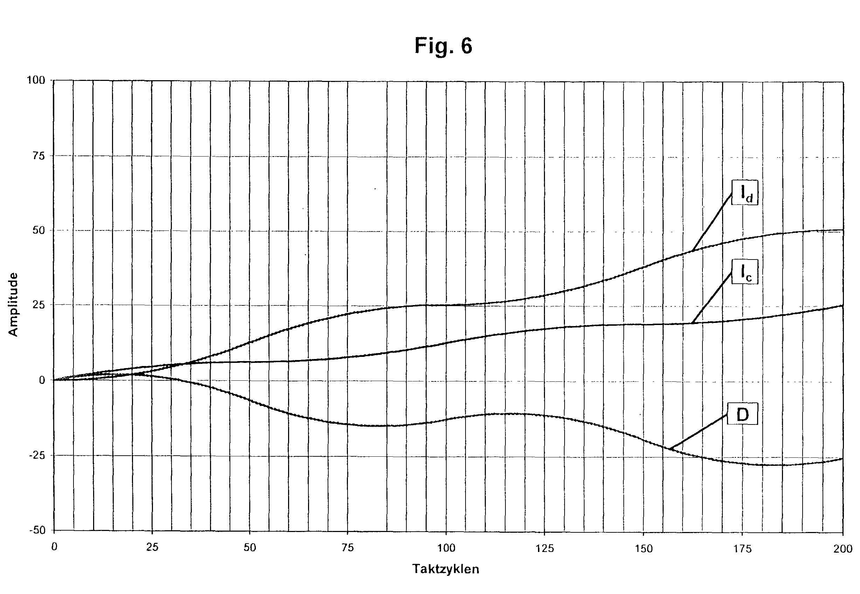

Fig. 6 veranschaulicht ein weiteres Problem, das durch die vorliegende Erfindung ebenfalls beseitigt wird:

Bei den Signalverläufen gemäß den Fig. 2 bis 5 wurde vorausgesetzt, daß die Gegentaktmischung mit den beiden Mischer-Eingangssignalen c, d (siehe Fig. 1) in Misch- bzw. Integrationsstufen stattfindet, die sich vollkommen symmetrisch verhalten. In der Praxis ist eine solche Symmetrie jedoch in der Regel nicht vorhanden, weshalb Fig. 6 die Auswirkungen einer solchen Unsymmetrie zeigt, wobei hier konkret unterschiedliche Verstärkungsfaktoren bei den beiden, die Signale c, d betreffenden Misch-bzw. Integrationsvorgängen angenommen werden.

Fig. 6 zeigt, daß die beiden Integrationssignale im Gegensatz zu den Verläufen gemäß den Fig. 2 bis 5 unterschiedlich hohe Amplituden und auch unterschiedliche Steigungen besitzen. Dies führt letztlich beim aus den Integrationssignalen I_{c} und I_{d} ermittelten Differenzsignal D dazu, daß es von einem Steigungsterm überlagert ist, so daß es gewissermaßen nach unten "wegläuft". Der dargestellte Offset zwischen den beiden Integrationssignalen I_{c} und I_{d} führt direkt auch zu einem Offset des Differenzsignals D. Sobald dieser Offset größer als die Amplitude des Differenzsignals D wird, sind keine Nulldurchgänge des Differenzsignals D mehr detektierbar.
Wenn nun auch noch Hintergrundstrahlung auftritt, führen die unsymmetrischen Verstärkungen der Misch- bzw. Integrationsstufen zu einem noch größeren überlagerten Steigungsterm des Differenzsignals D, so daß die Detektion der Nulldurchgänge zusätzlich erschwert wird.

Die in Verbindung mit den Fig. 2 bis 6 beschriebenen Probleme werden erfindungsgemäß nun im wesentlichen dadurch gelöst, daß das Differenzsignal D mit einem analog oder digital erzeugten Vergleichssignal verglichen wird. Dieses Vergleichssignal kann beispielsweise die gleiche Frequenz besitzen wie das Differenzsignal D, diesem gegenüber jedoch eine definierte Phasenverschiebung aufweisen. Ebenso kann das Vergleichssignal jedoch auch ein Signal sein, welches parallel zum Gleichanteilsignal des Differenzsignals D verläuft.

Beispielsweise durch Ermittlung der zeitlichen Lage der Schnittpunkte zwischen Differenzsignal D und Vergleichssignal kann dann jeweils auf die zu messende Entfernung rückgeschlossen werden, was nachfolgend noch anhand der Fig. 8 bis 15 erläutert wird.
Fig. 7 zeigt zunächst die Bedingungen, die den Signalverläufen gemäß den Fig. 8 bis 14 zugrunde liegen:

Das Sendesignal a ist wiederum ein periodisch oszillierendes Rechteck-Signal mit einer Sendefrequenz fₛ. Das erste Mischer-Eingangssignal c ist ebenfalls ein oszillierendes Rechteck-Signal, dessen Frequenz jedoch niedriger ist als die Sendefrequenz f_{S}. Konkret beträgt die Sendefrequenz fₛ wiederum das 1,01-fache der Frequenz f_{M}.

Das zweite Mischer-Eingangssignal d verläuft invers zum ersten Mischer-Eingangssignal c, so daß hier wiederum eine Gegentaktmischung durchgeführt werden kann.

Die beiden Mischer-Eingangssignale c, d sind gegenüber dem Sendesignal a um eine Phase von 90° verschoben.

Differenzsignal D und Vergleichssignal V (erst in den folgenden Figuren 8 bis 14 dargestellt) sind gegeneinander um 180° verschoben.

Fig. 8 zeigt den Verlauf der beiden Integrationssignale I_{c} und I_{d} sowie den Verlauf des daraus ermittelten Differenzsignals D und des gegenüber diesem Signal um 180° phasenverschobenen Vergleichssignals V.

Beim Diagramm gemäß Fig. 8 liegt eine Phasenverschiebung zwischen Sende- und Empfangssignal von 0° vor, so daß die entsprechende Messung wiederum zur Bestimmung eines Nullbezugs (zu bestimmende Entfernung gleich Null) herangezogen werden kann.

Erfindungsgemäß werden hierfür nicht die absoluten Amplituden von Differenzsignal D und Vergleichssignal V untersucht, sondern es wird lediglich das Differenzsignal D mit dem Vergleichssignal V verglichen, wobei durch diesen Vergleich automatisch ein den beiden Signalen D, V eventuell überlagerter Gleichanteil beseitigt wird. Durch die Phasenverschiebung von 180° zwischen Differenzsignal D und Vergleichssignal V wird erreicht, daß zwischen beiden Signalen jeweils ausreichend große Augenöffnungen entstehen, so daß der Schnittpunkt zwischen beiden Signalen D, V eindeutig bestimmt werden kann und nicht etwa durch flache Signalverläufe verfälscht oder uneindeutig wird.

Fig. 8 zeigt klar, daß die Schnittpunkte der beiden Signale D, V nach 75 Taktzyklen und nach 125 Taktzyklen problemlos bestimmbar sind. Zur Bestimmung des Nullbezugs werden nun die beiden genannten Taktanzahlen addiert und die dadurch erhaltene Summe anschließend halbiert, wodurch man einen Mittenzeitpunkt von 100 Taktzyklen erhält. Dementsprechend liegt also immer dann, wenn auf die genannte Art und Weise ein Mittenzeitpunkt von 100 Taktzyklen ermittelt wird, ein Abstand von Null bzw. eine Phasenverschiebung zwischen Sende- und Empfangssignal von 0° vor.

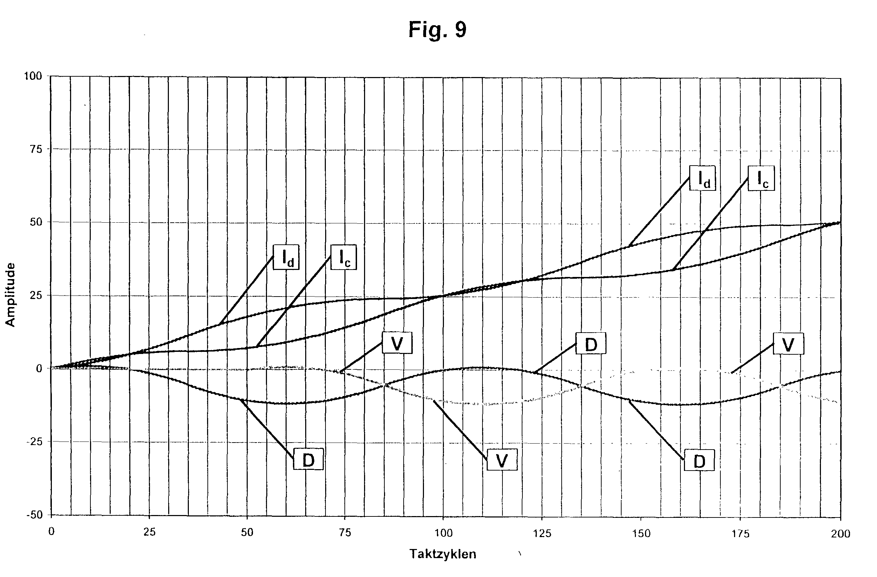

Fig. 9 zeigt ein Verfahren gemäß Fig. 8 bei einer Phasenverschiebung zwischen Sende- und Empfangssignal von 36°. Auch hier werden die Schnittpunkte zwischen Differenzsignal D und Vergleichssignal V ermittelt, die nun bei 85 bzw. bei 135 Taktzyklen liegen. Durch die in Verbindung mit Fig. 8 bereits erläuterte Berechnung ergibt sich ein Mittenzeitpunkt von 110 Taktzyklen, von dem der gemäß Fig. 8 ermittelte Nullbezug in Höhe von 100 Taktzyklen subtrahiert werden muß. Auf diese Weise erhält man einen für den zu ermittelnden Abstand relevanten Zeitdifferenzwert von 10 Taktzyklen. Wenn aus diesem Zeitdifferenzwert nun konkret auf die Phasenverschiebung zwischen Sende- und Empfangssignal rückgeschlossen werden soll, kann wie folgt vorgegangen werden:

Für den Fall, daß die genauen Frequenzen von Sendesignal und Mischer-Eingangssignalen bekannt sind, ist auch die Frequenz bzw. die Periodendauer des Vergleichssignals V bekannt, da die Frequenz des Vergleichssignals V - wie bereits erwähnt - gleich der Differenz der Frequenzen von Sendesignal und Mischer-Eingangssignalen ist. Diese Periodendauer des Vergleichssignals entspricht dann einer Phasenverschiebung von 360° zwischen Sende- und Empfangssignal.
Da im Beispiel gemäß Fig. 9 die Periodendauer des Vergleichssignals genau 100 Taktzyklen entspricht, entsprechen diese 100 Taktzyklen dementsprechend einer Phasenverschiebung von 360°. Da bei der Messung gemäß Fig. 9 als Zeitdifferenzwert 10 Taktzyklen ermittelt wurden, beträgt die der Messung gemäß Fig. 9 zugrundeliegende Phasenverschiebung zwischen Sende- und Empfangssignal ein Zehntel von 360°, also 36°.

Wenn die Frequenzen von Sendesignal und Mischer-Eingangssignalen nicht exakt bekannt sind, ist es alternativ auch möglich, insgesamt drei aufeinanderfolgende Schnittpunkte zwischen Differenzsignal D und Vergleichssignal V zu bestimmen, wobei dann der Abstand zwischen dem ersten und dem dritten Schnittpunkt der Periodendauer des Vergleichssignals V entspricht. Im Beispiel gemäß Fig. 9 liegt der erste Schnittpunkt bei 85 Taktzyklen und der dritte Schnittpunkt bei 185 Taktzyklen, so daß die Differenz zwischen diesen beiden Werten (100 Taktzyklen) der Periodendauer des Differenzsignals D entspricht. Demzufolge ist also auch dann die Bestimmung eines Entfernungsmeßwertes möglich, wenn die Frequenzen von Sendesignal oder Mischer-Eingangssignalen nicht genau bekannt sind.

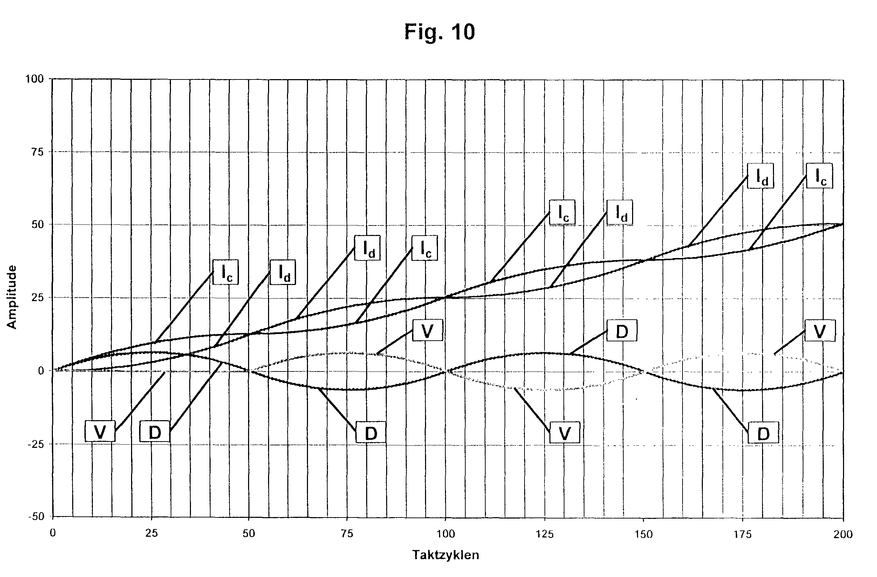

Fig. 10 zeigt ein Fig. 9 entsprechendes Diagramm, wobei hier eine Phasenverschiebung von 90° zwischen Sendesignal und Empfangssignal vorliegt. Hier liegt der erste zu berücksichtigende Schnittpunkt zwischen Differenzsignal D und Vergleichssignal V bei 100 Taktzyklen, der zweite zu berücksichtigende Schnittpunkt liegt bei 150 Taktzyklen.

Der erste, bei 50 Taktzyklen liegende Schnittpunkt wird gemäß einer bevorzugten Ausführungsform der Erfindung nicht berücksichtigt, da eine Berücksichtigung immer erst dann erfolgen soll, wenn eine Anzahl von Taktzyklen verstrichen ist, die größer oder gleich der Summe der Phasenverschiebung zwischen Vergleichssignal V und Differenzsignal D und der Phase zwischen Sendesignal und Mischer-Eingangssignal ist und wenn die nachstehend erwähnte Zusatzbedingung erfüllt ist. Die Phasenverschiebung zwischen Differenzsignal D und Vergleichssignal V beträgt, wie bereits erläutert, 180°, was 50 Taktzyklen entspricht. Die Phasenverschiebung zwischen Sendesignal und Empfangssignal entspricht 90°, also 25 Taktzyklen, was bedeutet, daß Schnittpunkte zwischen Differenzsignal D und Vergleichssignal V erst berücksichtigt werden, nachdem 75 Taktzyklen verstrichen sind. Zudem muß für die erste Berücksichtigung eines Schnittpunkts die Zusatzbedingung erfüllt sein, daß das Differenzsignal D das Vergleichssignal V von unten kommend schneidet. Dementsprechend wurde gemäß Fig. 10 der erste Schnittpunkt, der bei 50 Taktzyklen liegt, nicht berücksichtigt.

Die beiden zu berücksichtigenden Schnittpunkte gemäß Fig. 10 liegen somit bei 100 und bei 150 Taktzyklen, worauf sich nach der erläuterten Berechnungsmethode unter Einbeziehung des bereits ermittelten Nullbezugs ein Zeitdifferenzwert von 25 Taktzyklen ergibt. Setzt man diese 25 Taktzyklen wiederum in bezug zu einer vollen Periode des Vergleichssignals (100 Taktzyklen) gelangt man zu dem Ergebnis, daß die zu ermittelnde Phasenverschiebung zwischen Sende- und Empfangssignal einem Viertel einer vollen 360°-Periode des Differenzsignals D, also 90°, entspricht.

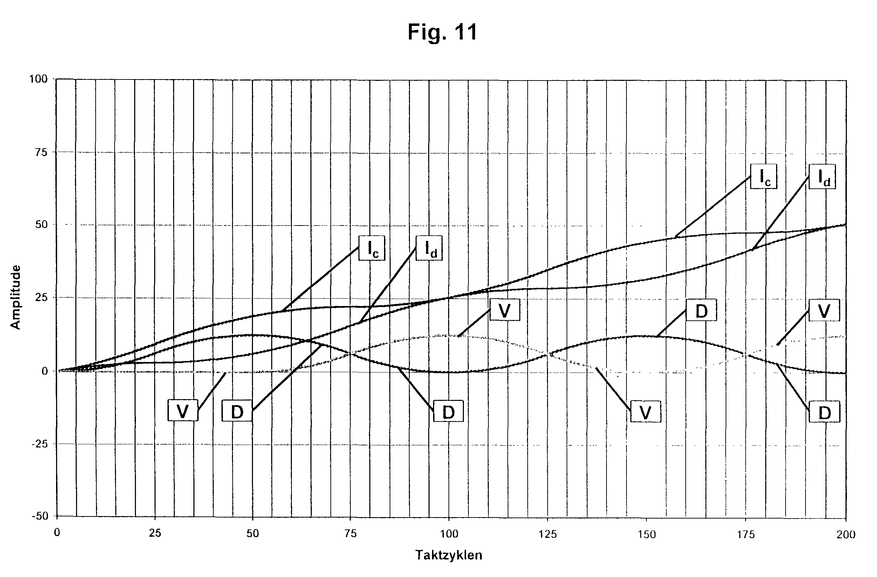

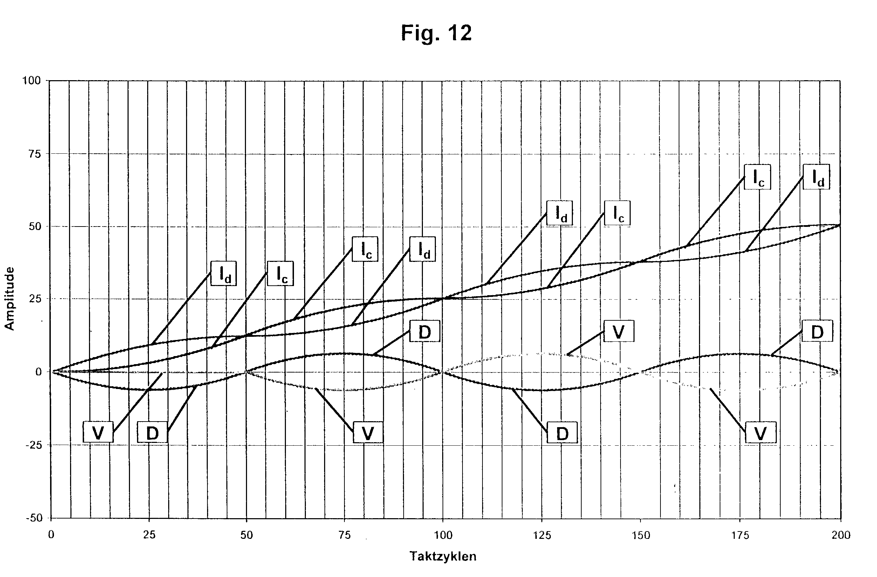

Die Fig. 11 und 12 zeigen den Fig. 9 und 10 entsprechende Signalverläufe bei Phasenverschiebungen von 180° und 270° zwischen Sende- und Empfangssignal.

Gemäß Fig. 11 liegen die relevanten Schnittpunkte bei 125 sowie bei 175 Taktzyklen. Die Hälfte der Summe dieser beiden Werte (Mittenzeitpunkt) beträgt 150 Taktzyklen. Subtrahiert man von diesem Wert den Nullbezug in Höhe von 100 Taktzyklen, erhält man letztlich einen Zeitdifferenzwert von 50 Taktzyklen, die einer halben 360°-Periode des Differenzsignals D, also 180°, entsprechen.

Dementsprechend erhält man bei Fig. 12 die relevanten Schnittpunkte bei 150 Taktzyklen sowie bei 200 Taktzyklen, so daß sich hier letztlich ein zu ermittelnder Zeitdifferenzwert von 75 Taktzyklen ergibt, welcher 270° Phasenverschiebung zwischen Sende- und Empfangssignal entspricht.

Die Beispiele der Fig. 8 bis 12 zeigen, daß erfindungsgemäß ein linearer Zusammenhang zwischen der Strahlungs- bzw. Lichtlaufzeit bzw. der Phasenverschiebung zwischen Sende- und Empfangssignal und den ermittelten Zeitdifferenzwerten besteht. Die für die Messung schließlich maßgeblichen Zeitdifferenzwerte lassen sich erfindungsgemäß mit wenig Aufwand genau ermitteln, da sich Differenzsignal D und Vergleichssignal V zumindest bei gleichbleibenden Empfangsamplituden immer unter gleichem Winkel schneiden, so daß die Schnittpunkte zwischen beiden Signalen auch bei Phasenlagen um N* 90° sicher erkannt werden können. Die Messung ist zudem durch die erfindungsgemäße Differenzbildung unabhängig von überlagerten, insbesondere phasenabhängigen Gleichsignalen.

Ein wesentlicher Vorteil der Erfindung ist zudem darin zu sehen, daß zur Meßwertgewinnung kein AD-Wandler, sondern nur noch ein Komparator benötigt wird, was eine deutliche Reduzierung des zu betreibenden Aufwands mit sich bringt.

Da sowohl das Differenzsignal D als auch das Vergleichssignal V aus der Differenz zwischen den beiden Integrationssignalen I_{c} und I_{d} gewonnen werden, wird auch Hintergrundstrahlung, insbesondere auch modulierte Hintergrundstrahlung, eliminiert, da sich deren Einflüsse auf die Integrationssignale I_{c} und I_{d} durch die genannte Differenzbildung gegenseitig kompensieren.

Zur zusätzlichen Erhöhung der Meßgenauigkeit kann das erfindungsgemäße Verfahren zur Ermittlung eines Entfernungsmeßwertes auch mehrere Male hintereinander durchgeführt werden, woraufhin dann eine Mittelung der erhaltenen Werte vorgenommen werden kann. Alternativ oder zusätzlich kann das Differenzsignal innerhalb einer einzigen Messung auch über einen Zeitraum von mehreren Meßzyklen Z bestimmt werden, wobei dann die auf diese Weise ermittelten mehreren Zeitdifferenzwerte der unterschiedlichen Meßzyklen Z wiederum gemittelt und dieser Mittelwert zur Bestimmung des Entfernungsmeßwertes herangezogen werden kann.

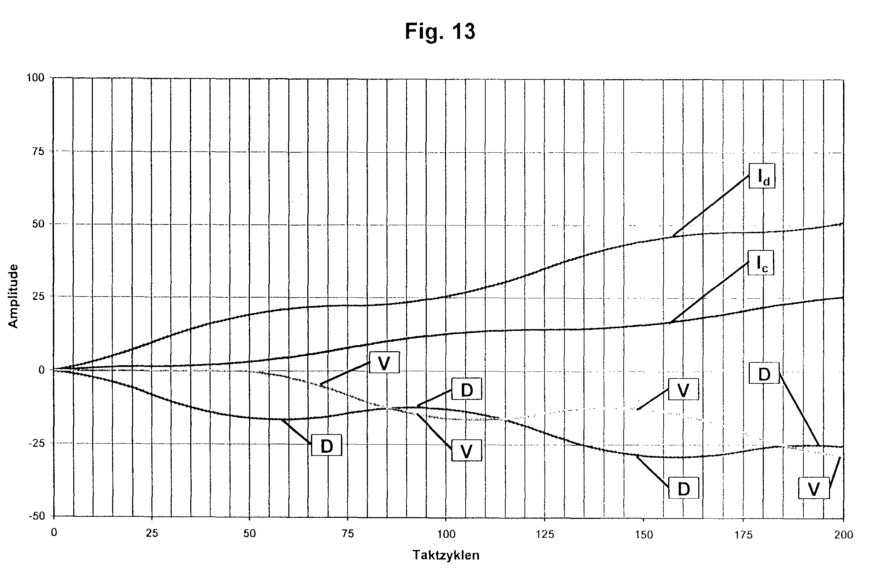

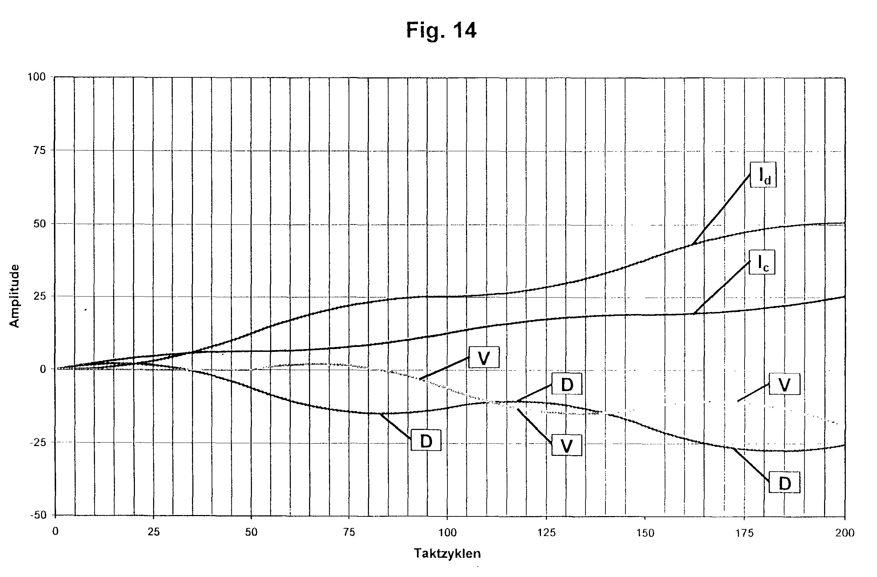

Die Signalverläufe gemäß den Fig. 8 bis 12 sind jeweils nur zutreffend, wenn die beiden Misch- bzw. Integrationsstufen voll symmetrisch arbeiten, was in der Praxis in der Regel nicht der Fall ist. Wenn nun in den beiden Gegentakt-Pfaden von Misch- bzw. Integrationsstufen beispielsweise verschiedene Verstärkungsfaktoren auftreten, ergibt sich wiederum das in Verbindung mit Fig. 6 bereits erläuterte "Weglaufen" des Vergleichssignals D. Selbst in diesem Fall funktioniert das erfindungsgemäße Verfahren jedoch problemlos, wobei die genannten Unsymmetrien ohne jeglichen Zusatzaufwand automatisch kompensiert werden, was Fig. 13 und 14 zeigen.

Gemäß Fig. 13 beträgt die Phasenverschiebung zwischen Sendesignal und Empfangssignal wiederum 0°, d.h., die in Fig. 13 dargestellte Messung kann zur Ermittlung des Nullbezugs herangezogen werden. Der erste Schnittpunkt zwischen Differenzsignal und Vergleichssignal liegt gemäß Fig. 13 bei 86 Taktzyklen, der zweite Schnittpunkt liegt bei 114 Taktzyklen. Der Mittenzeitpunkt bzw. die Hälfte der Summe dieser beiden Werte entspricht demzufolge 100 Taktzyklen, was zeigt, daß hier letztlich das gleiche Ergebnis erhalten wird wie gemäß Fig. 8. Gemäß Fig. 8 lagen die gleichen Bedingungen vor wie gemäß Fig. 13 mit dem Unterschied, daß Fig. 8 von symmetrisch arbeitenden Misch- und Integrationsstufen ausging und somit Differenzsignal D und Vergleichssignal V nicht nach unten "wegliefen", wie dies bei Fig. 13 der Fall ist. Fig. 13 zeigt also, daß die genannten Unsymmetrien zwischen Misch- und Integrationsstufen zu keiner Verfälschung des Meßergebnisses führen.

Dies belegt auch Fig. 14, der eine Phasenverschiebung zwischen Sende- und Empfangssignal von 90° zugrundeliegt. Der erste zu berücksichtigende Schnittpunkt zwischen Differenzsignal D und Vergleichssignal V liegt hier bei 111 Taktzyklen, der zweite Schnittpunkt liegt bei 139 Taktzyklen. Der Mittenzeitpunkt dieser beiden Werte liegt somit bei 125 Taktzyklen. Subtrahiert man von diesem Wert den Nullbezug in Höhe von 100 Taktzyklen, erhält man einen Zeitdifferenzwert von 25 Taktzyklen, also den gleichen Zeitdifferenzwert wie gemäß Fig. 10, welcher ebenfalls eine Phasenverschiebung von 90° zwischen Sende- und Empfangssignal zugrundelag.

Vorstehende Erläuterungen der Erfindung zeigen somit, daß Unsymmetrien in den Mischer- bzw. Integrationsstufen wie auch überlagerte Störsignale keinerlei Einfluß auf das Meßergebnis haben, so daß auch unter realen Praxisbedingungen ein linearer Zusammenhang zwischen externer Signallaufzeit bzw. Phasenverschiebung zwischen Sende- und Empfangssignal und dem ermittelten Zeitdifferenzwert sichergestellt ist.

Nachfolgend werden bevorzugte Ausführungsformen des erfindungsgemäßen Verfahrens beschrieben:

Die Phasenverschiebung zwischen Differenzsignal D und Vergleichssignal V muß nicht zwangsläufig gleich 180° sein, es ist ebenso denkbar, jeden anderen Wert, der ungleich 0° ist, zu wählen. Besonders bevorzugt sind jedoch Werte von 90°, 180° oder 270°.

Die Frequenz der Mischer-Eingangssignale c, d kann gegenüber der Frequenz des Sendesignals a um einen definierten Faktor erhöht oder erniedrigt sein. Dieser Faktor kann beispielsweise einen Wert zwischen (1 + 1/10⁶) und (1 + 1/100) annehmen. Besonders bevorzugt ist ein Wert von ungefähr (1 + 1/20000).

Die Zeitdauer einer Periode der Mischer-Eingangssignale entspricht bevorzugt einen Wert von 2ⁿ Takten, da bei einem solchen Wert die digitale Signal- bzw. Meßwertverarbeitung vereinfacht wird.

Bevorzugt ist es weiterhin, wenn die Zeitdauer von 2ⁿ Takten der Mischer-Eingangssignale c, d gleich der Zeitdauer von 2ⁿ + 1 Takten des Sendesignals a ist oder umgekehrt.

Das erste Mischer-Eingangssignal c weist gegenüber dem Sendesignal a bevorzugt eine definierte Phasenverschiebung auf, die insbesondere ungefähr die Hälfte, vorzugsweise genau die Hälfte der Phasenverschiebung zwischen dem Differenzsignal D und dem Vergleichssignal V beträgt.

Der gemäß den Fig. 8 und 13 ermittelte Nullbezug kann in regelmäßigen Zeitabständen neu festgelegt werden, um auf diese Weise veränderten Bedingungen Rechnung zu tragen.

Eine zusätzliche Erhöhung der Genauigkeit des erfindungsgemäßen Verfahrens läßt sich dadurch erreichen, daß innerhalb eines Meßzyklus zur Bestimmung eines Entfernungsmeßwertes mehrere, insbesondere 2ⁿ Mittenzeitpunkte ermittelt werden, deren Mittelwert dann der weiteren Verarbeitung zugeführt wird.

Als Sendesignal und/oder als Mischer-Eingangssignale können periodische Rechteck-, Dreieck-, Sinus- oder andere Pulsfolgen verwendet werden. Besonders bevorzugt ist es, wenn als Sendesignal und/oder als Mischer-Eingangssignale periodische Pulsfolgen mit hohem Zeit-Bandbreite-Produkt, insbesondere periodische Pseudo-Noise-Folgen oder periodische Barker-Codes verwendet werden.

Für das Sendesignal und die Mischer-Eingangssignale können unterschiedliche Signalformen eingesetzt werden. Ebenso ist es jedoch auch möglich, für das Sendesignal und/oder das erste Mischer-Eingangssignal und/oder das zweite Mischer-Eingangssignal untereinander gleiche Signalformen zu verwenden.

In bestimmten Anwendungsfällen ist es von Vorteil, wenn die Mischer-Ausgangssignale vor deren Integration verstärkt oder gedämpft werden.

Besonders vorteilhaft ist es, wenn das Empfangssignal auch mit einem dritten und vorzugsweise mit weiteren Mischer-Eingangssignalen, welche gegenüber dem ersten Mischer-Eingangssignal um definierte Phasen verschoben sind, gemischt wird, woraufhin das auf diese Weise erhaltene dritte Mischer-Ausgangssignal bzw. die weiteren Mischer-Ausgangssignale einer entsprechenden Verarbeitung zugeführt werden, wie das erste und das zweite Mischer-Ausgangssignal.

Weiterhin ist es möglich, daß zur Bestimmung eines Entfernungsmeßwertes nacheinander Sendesignale mit unterschiedlichen Frequenzen ausgesandt werden, wobei die Frequenzen der Mischer-Eingangssignale jeweils so festgelegt werden, daß die durch die unterschiedlichen Frequenzen gewonnenen zusätzlichen Meßwerte zur Bestimmung des Eindeutigkeitsbereichs herangezogen werden können.

Wenn im Rahmen des erfindungsgemäßen Verfahrens auch die Amplitude des von seinem Gleichanteil befreiten Differenzsignals erfaßt wird, kann diese Amplitude zur Grauwertbestimmung des erfaßten Objektes herangezogen werden.

Besonders vorteilhaft ist es, wenn ein Zähler mit der Frequenz f_{M} des Mischer-Eingangssignals c, d getaktet wird. Dabei kann der Zähler bei Erreichen eines vorgegebenen Maximalwerts, der insbesondere gleich 2ⁿ ist, wieder bei "0" zu zählen beginnen, so daß auf diese Weise letztlich ein Kreiszähler entsteht. Besonders bevorzugt ist es in diesem Fall, wenn die Frequenz fₛ des Sendesignals und die Frequenz f_{M} des Mischer-Eingangssignals derart gewählt werden, daß ein Takt des Zählers einer Maßeinheit der zu ermittelnden Entfernung, insbesondere einem Millimeter oder einem Grad Phasenverschiebung zwischen Sende- und Empfangssignal entspricht. Hierbei ist es von Vorteil, wenn der Zählernullpunkt derart festgelegt wird, daß er immer bei 0° Phasenverschiebung zwischen Sende- und Empfangssignal auftritt. In diesem Fall kann der durch das erfindungsgemäße Verfahren gelieferte, dem Zähler entnommene Digitalwert mit nur minimalem Umrechnungsaufwand (z.B. Binär-Dezimal-Wandlung) einer weiteren Verarbeitung zugeführt werden, so daß ein das erfindungsgemäße Verfahren realisierender Hardware-Baustein lediglich eine einzige Ausgangsleitung benötigt, über die die jeweils ermittelten Werte übertragen werden.
Alternativ ist es auch möglich, als einziges Ausgangssignal das Differenzsignal D zur Verfügung zu stellen, welches dann weiterverarbeitet werden kann.

Die gesamte, zur Realisierung des erfindungsgemäßen Verfahrens nötige Signalverarbeitung und -erzeugung kann analog, digital, oder teilweise analog und teilweise digital erfolgen.

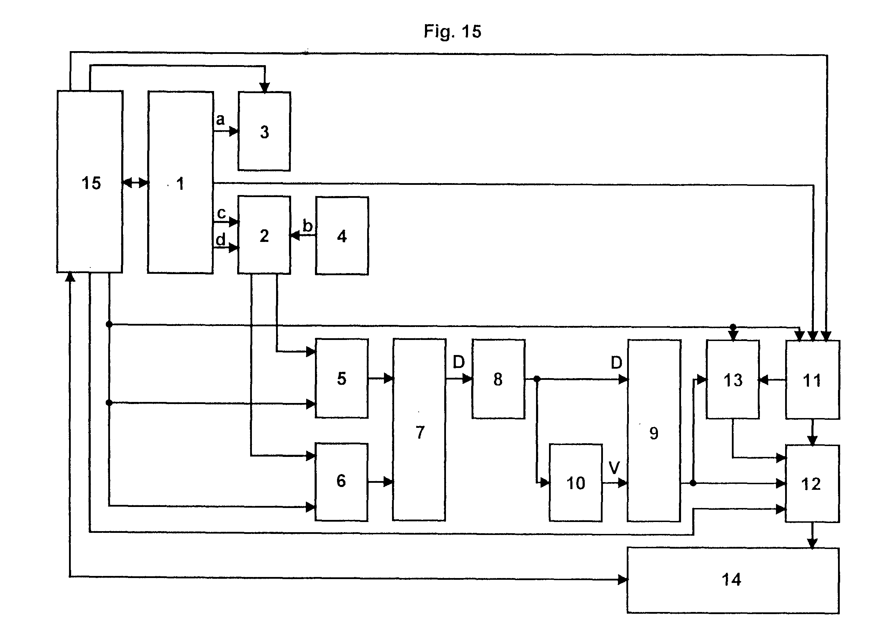

Fig. 15 zeigt ein Blockschaltbild einer erfindungsgemäßen Vorrichtung:

Ein hochstabiler Frequenzgenerator 1 liefert die beiden Mischer-Eingangssignale c und d, welche einen Gegentaktmischer 2 beaufschlagen. Der Frequenzgenerator 1 erzeugt dabei auch das Sendesignal a, welches einen Lichtsender 3 beaufschlagt und zur Aussendung von entsprechenden Lichtimpulsen veranlaßt. Die Modulationsfrequenz fₛ des Senders 3 ist dabei geringfügig höher (oder alternativ niedriger) als die Modulationsfrequenz f_{M} des Gegentaktmischers 2.

Falls ein vom Sender 3 ausgesandtes Lichtsignal von einem (nicht dargestellten) Objekt im Meßbereich zu einem Lichtempfänger 4 reflektiert oder remittiert wird, erzeugt der Lichtempfänger 4 ein entsprechendes Empfangssignal b, welches einem dritten Eingang des Gegentaktmischers 2 zugeführt wird.

Die beiden vom Gegentaktmischer 2 gelieferten Mischer-Ausgangssignale werden jeweils einem Integrator 5, 6 zugeführt. Die Ausgänge der beiden Integratoren 5, 6 beaufschlagen einen Subtrahierer 7, an dessen Ausgang das erfindungsgemäße Differenzsignal D anliegt. Dieses Differenzsignal D kann über einen optionalen Tiefpaß 8 geführt werden, um auf diese Weise eine Bandbegrenzung zur Verbesserung des Signal-Rausch-Abstandes zu erreichen. Das Differenzsignal D wird dann zum einen direkt einem ersten Eingang eines Komparators 9 und zum andern über ein Verzögerungsglied 10 als Vergleichssignal V einem zweiten Eingang des Komparators 9 zugeführt.

Immer dann, wenn der Komparator 9 eine Amplitudengleichheit von Differenz D und Vergleichssignal V feststellt, wird der aktuelle Stand eines vom Frequenzgenerator 1 getakteten Zählers 11 in einem Speicher 12 abgelegt.

Eine geeignete Logik 13 stellt sicher, daß frühestens mit Erreichen eines bestimmten Zählerstandes und nur durch einen Übergang des Komparatorausgangs von 0 nach 1 (oder alternativ von 1 nach 0) der erste Meßwert abgelegt wird. Beim anschließenden Übergang von 1 nach 0 (bzw. von 0 nach 1) wird dann der nächste Zählerstand gespeichert, etc.

Eine Auswerteeinheit 14 kann aus den so gewonnenen Zählerständen gemäß der vorstehend beschriebenen Verfahren zum einen einen Maßstab für die Entfernung und zum anderen auch die tatsächliche Meßentfernung zum Objekt ermitteln. Die in Fig. 16 dargestellten elektronischen Bausteine werden dabei von einer geeigneten Steuereinheit 15 kontrolliert.

Der Frequenzgenerator 1 kann bevorzugt auf DDS (Direct Digital Synthesiser)-Basis aufgebaut sein.

Der Empfänger 4 kann beispielsweise als PIN-Diode, Avalanche-Photodiode, CMOS-Diode, CMOS-Phototransistor, CMOS-Photogate, Mikrowellenempfänger oder Photomischdetektor ausgebildet werden.

Insbesondere kann der Empfänger als Einzel- oder Mehrfachdiode ausgeführt sein, wobei die mehreren Dioden einer Mehrfachdiode insbesondere zur Erzeugung unterschiedlicher Eingangssignale für entsprechend viele Eingänge einer Mischstufe verwendet werden können.

Der Zähler 11 kann als Gray-Code-Zähler, Binärzähler oder Pseudo-Random-Noise-Zähler ausgebildet sein.

Die erfindungsgemäße Vorrichtung bzw. das erfindungsgemäße Verfahren kommt besonders bevorzugt in entfernungs- oder ortsauflösenden Sensoren zum Einsatz. Ebenso ist es möglich, das erfindungsgemäße Verfahren sowie die erfindungsgemäße Vorrichtung in einer Pixelzeile oder einem Pixelarray von Photoempfängern einzusetzen, wobei dann jedem Photoempfänger eine eigene erfindungsgemäße, entfernungsauflösende Vorrichtung zugeordnet werden kann. In diesem Fall genügt es, wenn lediglich ein Zähler 11 vorgesehen wird, welcher zu den jeweils erforderlichen Zeitpunkten von sämtlichen Vorrichtungen abgefragt werden kann.

## Patentansprüche

1. Verfahren zur Bestimmung von Entfernungsmeßwerten, bei dem von einem Sender ein oszillierendes Sendesignal (a) ausgesandt wird, welches von einem im Meßbereich vorhandenen Objekt reflektiert oder remittiert und von einem ortsnah zum Sender angeordneten Empfänger empfangen wird, wobei
- das Empfangssignal (b) mit einem ersten Mischer-Eingangssignal (c) und mit einem zweiten Mischer-Eingangssignal (d), welches gegenüber dem ersten Mischer-Eingangssignal (c) um eine definierte Phase verschoben ist, gemischt wird,
- die beiden, durch die genannten Mischvorgänge erhaltenen Mischer-Ausgangsignale integriert werden,
- die beiden durch die Integrationen erhaltenen Integrationssignale (I_{c}, I_{d}) voneinander subtrahiert werden,
- das durch die Subtraktion erhaltene Differenzsignal (D) einer weiteren Verarbeitung zugeführt wird, und
- zur Bestimmung eines Entfernungsmeßwertes das Differenzsignal (D) mit einem analog oder digital erzeugten Vergleichssignal (V) verglichen wird.

2. Verfahren nach Anspruch 1,
**dadurch gekennzeichnet,**
**daß** das Vergleichssignal (V) die gleiche Frequenz besitzt wie das Differenzsignal (D), diesem gegenüber jedoch eine definierte Phasenverschiebung aufweist, oder
**daß** das Vergleichssignal (V) ein Signal ist, welches im wesentlichen parallel zum Gleichanteilssignal des Differenzsignals (D) verläuft.

3. Verfahren nach einem der vorhergehenden Ansprüche,
**dadurch gekennzeichnet,**
**daß** das zweite Mischer-Eingangssignal (d) gegenüber dem ersten Mischer-Eingangssignal (c) um 180° phasenverschoben ist, und/oder
**daß** die Phasenverschiebung zwischen dem Differenzsignal (D) und dem Vergleichssignal (V) ungleich 0° ist und insbesondere 90° oder 180° oder 270° beträgt, und/oder
**daß** die Frequenz der Mischer-Eingangssignale (c, d) gegenüber der Frequenz des Sendesignals um einen definierten Faktor erhöht oder erniedrigt ist, wobei der Faktor vorzugsweise einen Wert zwischen (1 + 1/10⁶) und (1+1/100), insbesondere einen Wert von ungefähr (1+1/20.000) besitzt.

4. Verfahren nach einem der vorhergehenden Ansprüche,
**dadurch gekennzeichnet,**
**daß** die Zeitdauer einer Periode der Mischer-Eingangssignale (c, d) 2ⁿ Takten entspricht, und/oder
**daß** die Zeitdauer von 2ⁿ Takten der Mischer-Eingangssignale (c, d) gleich der Zeitdauer von 2ⁿ +1 Takten des Sendesignals (a) ist oder umgekehrt, und/oder
**daß** mittels eines Komparators (g) festgestellt wird, ob das Differenzsignal (D) größer oder kleiner als das Vergleichssignal (V) ist, und/oder
**daß** das erste Mischer-Eingangssignal (c) gegenüber dem Sendesignal (a) eine definierte Phasenverschiebung aufweist, wobei vorzugsweise die Phasenverschiebung zwischen dem ersten Mischer-Eingangssignal (c) und dem Sendesignal (a) ungefähr die Hälfte, insbesondere genau die Hälfte der Phasenverschiebung zwischen dem Differenzsignal (D) und dem Vergleichssignal (V) beträgt.

5. Verfahren nach einem der vorhergehenden Ansprüche,
**dadurch gekennzeichnet,**
**daß** diejenigen Zeit- bzw. Schnittpunkte ermittelt werden, zu denen sich Differenz- und Vergleichssignal (D, V) schneiden.

6. Verfahren nach Anspruch 5,
**dadurch gekennzeichnet,**
**daß** der zeitlich mittig zwischen zwei benachbarten Schnittpunkten liegende Mittenzeitpunkt ermittelt wird, insbesondere durch Addition der ermittelten Zeitpunkte und durch Halbierung der auf diese Weise gewonnenen Summe,
wobei vorzugsweise ein Nullbezugszeitpunkt festgelegt wird, der dem Mittenzeitpunkt bei einer Phasenverschiebung von 0° zwischen Sende- und Empfangssignal (a, b) entspricht, wobei der Nullbezugszeitpunkt insbesondere in regelmäßigen Zeitabständen neu festgelegt wird.

7. Verfahren nach Anspruch 6,
**dadurch gekennzeichnet,**
**daß** ein Zeitdifferenzwert durch Subtraktion des Nullbezugszeitpunkts von jedem ermittelten Mittenzeitpunkt erhalten wird,
wobei vorzugsweise der Quotient aus dem Zeitdifferenzwert und der Periodendauer des Differenzsignals D, welcher proportional zur Phasenverschiebung zwischen Sende- und Empfangssignal (a, b) ist, zur Bestimmung des Entfernungsmeßwertes herangezogen wird.

8. Verfahren nach einem der Ansprüche 6 und 7,
**dadurch gekennzeichnet,**
**daß** innerhalb eines Meßzyklus (Z) zur Bestimmung eines Entfernungsmeßwertes mehrere, insbesondere 2²ⁿ Mittenzeitpunkte ermittelt werden, deren Mittelwert dann der weiteren Verarbeitung zugeführt wird.

9. Verfahren nach einem der vorhergehenden Ansprüche,
**dadurch gekennzeichnet,**
**daß** als Sendesignal (a) und/oder als Mischer-Eingangssignale (c, d) periodische Rechteck-, Dreieck-, Sinus- oder andere Pulsfolgen verwendet werden, und/oder
**daß** als Sendesignal (a) und/oder als Mischer-Eingangssignale (c, d) periodische Pulsfolgen mit hohem Zeit-Bandbreite-Produkt, insbesondere periodische Pseudo-Noise-Folgen oder periodische Barker-Codes verwendet werden, und/oder
**daß** für Sendesignal (a) und Mischer-Eingangssignale (c, d) unterschiedliche Signalformen eingesetzt werden, wobei das Sendesignal (a) und/oder das erste Mischer-Eingangssignal (c) und/oder das zweite Mischer-Eingangssignal (d) vorzugsweise untereinander gleiche Signalformen aufweisen.

10. Verfahren nach einem der vorhergehenden Ansprüche,
**dadurch gekennzeichnet,**
**daß** die Mischer-Ausgangsignale vor deren Integration verstärkt oder gedämpft werden, und/oder
**daß** das Empfangssignal (b) auch mit einem dritten und vorzugsweise mit weiteren Mischer-Eingangssignalen, welche gegenüber dem ersten Mischer-Eingangssignal (c) um definierte Phasen verschoben sind, gemischt wird, woraufhin das auf diese Weise erhaltene dritte Mischer-Ausgangsignal bzw. die weiteren Mischer-Ausgangssignale einer entsprechenden Verarbeitung zugeführt werden, wie das erste und das zweite Mischer-Ausgangssignal, und/oder
**daß** zur Bestimmung eines Entfernungsmeßwertes nacheinander Sendesignale (a) mit unterschiedlichen Frequenzen ausgesandt werden, wobei die Frequenzen der Mischer-Eingangssignale (c, d) jeweils so festgelegt werden, daß die durch die unterschiedlichen Frequenzen gewonnenen zusätzlichen Meßwerte zur Bestimmung des Eindeutigkeitsbereichs herangezogen werden können, und/oder
**daß** die Amplitude des von seinem Gleichanteil befreiten Differenzsignals (D) zur Grauwertbestimmung des erfaßten Ojektes bzw. Pixels herangezogen wird.

11. Verfahren nach einem der vorhergehenden Ansprüche,
**dadurch gekennzeichnet,**
**daß** ein Zähler (11) mit der Frequenz f_{M} des Mischer-Eingangssignals (c, d) oder des Sendesignals (a) getaktet wird.

12. Verfahren nach Anspruch 11,
**dadurch gekennzeichnet,**
**daß** der Zähler (11) bei Erreichen eines vorgegebenen Maximalwerts, der insbesondere gleich 2ⁿ ist, wieder bei "0" zu zählen beginnt, und/oder
**daß** die Frequenz fₛ des Sendesignals (a) und die Frequenz f_{M} des Mischer-Eingangssignals (c, d) derart gewählt werden, daß ein Takt des Zählers (11) einer Maßeinheit der zu ermittelnden Entfernung, insbesondere einem Millimeter, oder 1° Phasenverschiebung zwischen Sende- und Empfangssignal (a, b) entspricht, und/oder
**daß** der Zählernullpunkt derart festgelegt wird, daß er immer bei 0° Phasenverschiebung zwischen Sende- und Empfangssignal (a, b) auftritt.

13. Verfahren nach einem der vorhergehenden Ansprüche,
**dadurch gekennzeichnet,**
**daß** die Signalverarbeitung und -erzeugung gemäß einem der Ansprüche 1 bis 31 analog, digital oder teilweise analog und teilweise digital erfolgt.

14. Vorrichtung zur Bestimmung von Entfernungsmeßwerten, mit einem, ein oszillierendes Sendesignal (a) aussendenden Sender (3) und einem ortsnah zum Sender (3) angeordneten Empfänger (4), welcher ausgesandte, von einem im Meßbereich vorhandenen Objekt reflektierte oder remittierte Strahlung empfängt, wobei
- ein Mischer (2) vorgesehen ist, welcher das Empfangssignal (b) mit einem ersten Mischer-Eingangssignal (c) und mit einem zweiten Mischer-Eingangssignal (d), welches gegenüber dem ersten Mischer-Eingangssignal (c) um eine definierte Phase verschoben ist, mischt,
- zumindest ein Integrator (5, 6) vorgesehen ist, der die beiden, durch die genannten Mischvorgänge erhaltenen Mischer-Ausgangsignale integriert,
- eine Differenzstufe (7) vorgesehen ist, die die beiden durch die Integrationen erhaltenen Integrationssignale voneinander subtrahiert, und
- eine Auswerteeinheit (10 bis 14) vorgesehen ist, in welcher das durch die Subtraktion erhaltene Differenzsignal einer weiteren Verarbeitung zugeführt wird, wobei
- die Auswerteeinheit (10 bis 14) eine Vergleichsstufe (9) beinhaltet, die zur Bestimmung eines Entfernungsmeßwertes das Differenzsignal (D) mit einem analog oder digital erzeugten Vergleichssignal (V) vergleicht, welches entweder die gleiche Frequenz besitzt wie das Differenzsignal (D), diesem gegenüber jedoch eine definierte Phasenverschiebung aufweist oder welches ein Signal ist, das parallel zum Gleichanteilssignal des Differenzsignals (D) verläuft.

15. Vorrichtung nach Anspruch 14,
**dadurch gekennzeichnet,**
**daß** der Sender (3) als Lichtsender und der Empfänger (4) als Lichtempfänger ausgebildet sind, und/oder
**daß** am Ausgang der Differenzstufe (7) ein Tiefpaß (8) vorgesehen ist, und/oder
**daß** hochstabile Frequenzgeneratoren (1), insbesondere Frequenzgeneratoren auf DDS (Direct Digital Synthesizer) - Basis zur Erzeugung der den Sender (3) und/oder den Mischer (2) ansteuernden Signale vorgesehen sind, und/oder
**daß** der Empfänger (4) als PIN-Diode, Avalanche-Photodiode, CMOS-Diode, CMOS-Phototransistor, CMOS-Photogate, Mikrowellenempfänger oder Photomischdetektor ausgebildet ist, und/oder
**daß** der Empfänger (4) als Einzel- oder Mehrfachdiode ausgebildet ist, wobei die mehreren Dioden einer Mehrfachdiode insbesondere zur Erzeugung unterschiedlicher Mischer-Eingangsignale verwendbar sind.

16. Vorrichtung nach einem der Ansprüche 14 und 15,
**dadurch gekennzeichnet,**
**daß** ein Zähler (11) vorgesehen ist, der mit der Frequenz f_{M} des Mischer-Eingangssignals (c, d) getaktet ist,
wobei der Zähler (11) vorzugsweise als Kreiszähler ausgelegt ist, der bei Erreichen eines vorgegebenen Maximalwerts wieder bei "0" zu zählen beginnt,
wobei der vorgegebene Maximalwert insgesondere gleich 2ⁿ ist.

17. Vorrichtung nach Anspruch 16,
**dadurch gekennzeichnet,**
**daß** die Frequenz fₛ des Sendesignals (a) und die Frequenz f_{M} des Mischer-Eingangssignals (c, d) derart gewählt sind, daß ein Takt des Zählers (11) einer Maßeinheit der zu ermittelnden Entfernung, insbesondere einem Millimeter, oder 1° Phasenverschiebung zwischen Sende- und Empfangssignal (a, b) entspricht, und/oder
**daß** der Zählernullpunkt derart definiert ist, daß er immer bei 0° Phasenverschiebung zwischen Sende- und Empfangssignal (a, b) auftritt, und/oder
**daß** der Zähler (11) als Gray-Code-Zähler, Binärzähler oder Pseudo-Random-Noise-Zähler ausgebildet ist.

18. Vorrichtung nach einem der Ansprüche 14 bis 17,
**dadurch gekennzeichnet,**
**daß** elektronische Bausteine zur Durchführung der Verfahren gemäß den Ansprüchen 1 bis 13 vorgesehen sind.

19. Entfernungs- oder ortsauflösender Sensor,
**gekennzeichnet durch**
eine Vorrichtung nach einem der Ansprüche 14 bis 18.

20. Pixelzeile oder Pixelarray von Photoempfängern,
**dadurch gekennzeichnet,**
**daß** jedem Photoempfänger (4) eine Vorrichtung nach einem der Ansprüche 14 bis 18 zur Ermittlung von Entfernungsmeßwerten zugeordnet ist.
